(19) **Europäisches Patentamt / European Patent Office / Office européen des brevets**

(11) **EP 2 022 009 B1**

(12) **FASCICULE DE BREVET EUROPEEN**

(45) Date de publication et mention de la délivrance du brevet:
**15.05.2019 Bulletin 2019/20**

(21) Numéro de dépôt: **07731963.0**

(22) Date de dépôt: **27.04.2007**

(51) Int Cl.:
***G06T 15/00*** *(2011.01)*

(86) Numéro de dépôt international:
**PCT/FR2007/051192**

(87) Numéro de publication internationale:
**WO 2007/135309 (29.11.2007 Gazette 2007/48)**

(54) **PROCEDE DE CODAGE ET SYSTEME D'AFFICHAGE SUR UN ECRAN D'UNE MAQUETTE NUMERIQUE D'UN OBJET SOUS FORME D'UNE IMAGE DE SYNTHESE**

VERFAHREN ZUM CODIEREN UND SYSTEM ZUM ANZEIGEN EINES NUMERISCHEN IMITATS EINES OBJEKTS IN FORM EINES SYNTHESEBILDES AUF EINEM BILDSCHIRM

METHOD OF CODING AND SYSTEM FOR DISPLAYING ON A SCREEN A NUMERICAL MOCK-UP OF AN OBJECT IN THE FORM OF A SYNTHESIS IMAGE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **12.05.2006 FR 0604266**

(43) Date de publication de la demande:
**11.02.2009 Bulletin 2009/07**

(73) Titulaire: **Techviz**
**75011 Paris (FR)**

(72) Inventeur: **VARTANIAN, Alexis**
**75005 Paris (FR)**

(74) Mandataire: **Cabinet Plasseraud**
**66, rue de la Chaussée d'Antin**
**75440 Paris Cedex 09 (FR)**

(56) Documents cités:
**FR-A- 2 840 705     US-A- 5 325 485**
**US-A- 5 777 620     US-A1- 2003 117 589**
**US-B1- 6 362 825**

- **MOLNAR S ET AL: "PixelFlow: High-Speed Rendering Using Image Composition" COMPUTER GRAPHICS PROCEEDINGS. ANNUAL CONFERENCE SERIES. SIGGRAPH, XX, XX, Bd. 26, Nr. 2, Juli 1992 (1992-07), Seiten 231-237, XP002988777**
- **SAMANTA R ET AL: "HYBRID SORT-FIRST AND SORT-LAST PARALLEL RENDERING WITH A CLUSTER OF PCS" PROCEEDINGS 2000 SIGGRAPH/EUROGRAPHICS WORKSHOP ON GRAPHICS HARDWARE. INTERLAKEN, SWITZERLAND, AUG. 21 - 22, 2000, SIGGRAPH / EUROGRAPHICS WORKSHOP ON GRAPHICS HARDWARE, NEW YORK, NY : ACM, US, 21. August 2000 (2000-08-21), Seiten 97-108, XP000964478 ISBN: 1-58113-257-3**
- **FEARING P.: "Predictive Rendering" UNIVERSITY OF BRITISH COLUMBIA - MSC THESIS, 1996, XP002411578**

EP 2 022 009 B1

Printed by Jouve, 75001 PARIS (FR)

**Description**

Le domaine de l'affichage sur écran de maquettes numériques d'un objet sous forme d'une image de synthèse voit son importance croître sans relâche, en raison des applications dans les domaines d'application, tels que les domaines techniques, scientifiques ou de recherche.

Parmi les domaines précités, on peut citer notamment la conception assistée par ordinateur, pour les applications relatives au domaine des industries mécaniques, la conduite de processus de fabrication d'objets spécifiques, la télé-intervention en zone dangereuse, ou sensible, couvrant notamment, les interventions en microchirurgie ou autres.

Ces domaines d'application requièrent tous une précision et une fidélité de reproduction d'objets ou de parties d'objet de très haute qualité, ce qui peut être obtenu en imagerie de synthèse.

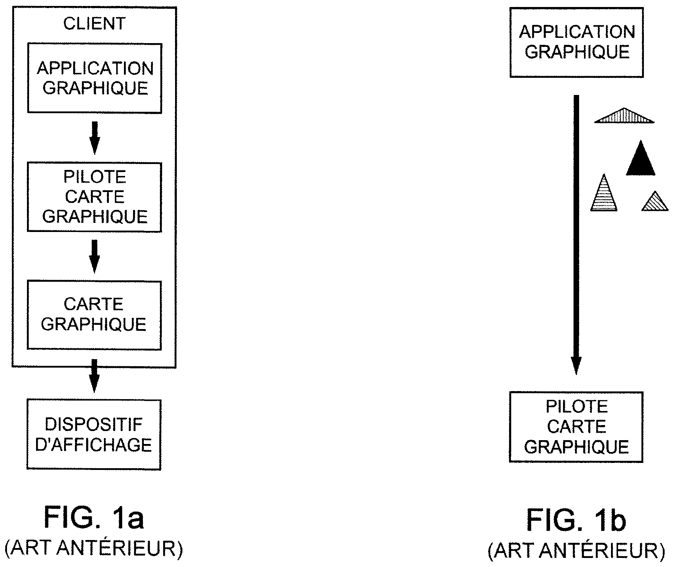

Ainsi que représenté de manière illustrative sur la figure 1a, les systèmes d'affichage sur écran d'une maquette numérique sous forme d'une image de synthèse comportent dans une station de travail, par exemple, une application graphique de type client permettant de fournir des signaux numériques à un pilote de carte graphique assurant l'interface avec une carte graphique, laquelle permet de piloter un dispositif d'affichage.

Ainsi que représenté en outre en figure 1b, l'application graphique fournit un flux d'éléments d'image au pilote de carte graphique et à la carte graphique. Le flux d'éléments d'image inclut des éléments d'image adressables, chacun formé par une forme géométrique, généralement triangulaire, selon les normes en vigueur. La forme triangulaire précitée n'est pas indispensable, mais cette dernière est apparue d'un intérêt pratique pour les affichages en imagerie tridimensionnelle de synthèse, imagerie 3D.

Les systèmes d'affichage de l'art antérieur précités donnent satisfaction, car ils permettent des représentations fidèles et adaptatives d'objets de toute sorte en imagerie de synthèse 3D.

Toutefois, leur utilisation, malgré leur caractère adaptatif, est limitée à des objets à évolution très lentement variable, en raison, notamment, de l'accroissement du volume d'information, et de données numériques supportant cette information, nécessaire à un traitement dynamique de toute représentation d'objet de synthèse ou imagerie 3D.

En tout état de cause, outre la puissance de calcul, très importante, qui est nécessaire à l'exécution d'un tel traitement, et qui généralement n'est pas disponible sur des stations de travail habituellement disponibles dans le commerce, les cartes graphiques usuelles nécessaires à l'affichage 3D des images de synthèse reconstituées ne peuvent non plus prétendre exécuter un rendu totalement satisfaisant de la fluidité d'images de synthèse dynamique, en raison de leur incapacité à engendrer un rafraîchissement d'un volume de données d'affichage trop important.

En particulier, dans le domaine de l'imagerie de synthèse 3D, la difficulté au niveau de l'affichage est rédhibitoire, en raison d'une inadéquation de la résolution de l'affichage, nombre fixe de pixels $N_p$, et du volume, en nombre $N_b$ d'éléments d'images adressables, notamment lors d'une synthèse 3D dynamique.

En effet, le nombre $N_p$ de pixels d'affichage dans l'image étant fixe, et donc limité, il n'existe pas de processus technique permettant d'optimiser le rapport $N_p/N_b$ du nombre de pixels au nombre d'éléments d'images de l'image d'affichage. Or l'image est caractérisée, en image de synthèse 3D dynamique, par le débit en nombre $N_b$ d'éléments d'image par seconde et l'affichage 3D est défini par la fréquence d'affichage d'image $F_i$.

En particulier, si la fréquence d'affichage d'image est trop faible, $F_i < 5$ images par seconde, le système ne peut être valablement utilisé, car le temps d'établissement d'image est trop long et l'on n'obtient jamais la bonne vue, ce qui engendre un problème de latence.

De plus, l'affichage est alors saccadé ce qui, bien entendu, est néfaste à la vision globale de l'objet en imagerie de synthèse 3D.

D'autres exemples et modes de réalisation de l'art antérieur peuvent être trouvés dans US 6362825 et US 5325485.

La présente invention vise à remédier aux inconvénients des systèmes et procédés d'affichage en imagerie de synthèse de l'art antérieur, par la mise en oeuvre d'un procédé et d'un système *sui generis* d'affichage sur un écran d'une maquette numérique d'un objet sous forme d'une image de synthèse, grâce auxquels l'inadéquation pour chaque image du volume d'information à afficher dans chaque zone d'affichage de l'écran d'affichage est sensiblement supprimée.

En particulier, un autre objet de la présente invention est la mise en oeuvre d'un procédé et d'un système d'affichage sur un écran d'une maquette numérique d'un objet sous forme d'une image de synthèse 3D, dans lesquels le volume ou débit d'information dynamique est sensiblement restreint par codage spécifique, ce qui permet en outre d'augmenter sensiblement la fluidité de l'affichage de synthèse 3D.

Un autre objet de la présente invention est enfin la mise en oeuvre d'un procédé et d'un système d'affichage sur un écran d'une maquette numérique d'un objet sous forme d'une image de synthèse 3D dans lesquels un processus d'anticipation de l'effet de tout événement externe à la représentation et à l'affichage de synthèse 3D est introduit, ce qui permet, par exemple, de maintenir la fluidité de l'affichage de l'image de synthèse 3D par anticipation de la réponse de l'application à cet événement externe.

Le procédé de codage sous forme d'un fichier numérique d'image de synthèse tridimensionnelle d'une maquette numérique d'un objet, à partir d'un modèle de cet objet formé par un flux d'éléments d'images délivré par un module applicatif à partir de la maquette numérique, objet de la présente invention, est remarquable en ce qu'il inclut au moins les étapes consistant à discriminer, dans le flux d'éléments d'images, des images élémentaires constitutives d'au moins une partie de l'image de synthèse tridimensionnelle à afficher, coder chaque image élémentaire successive selon une valeur d'index représentative du contenu de cette image élémentaire, calculer les valeurs numériques de l'image de synthèse tridimensionnelle, à partir de la valeur d'index représentative du contenu de chaque image élémentaire et mémoriser les valeurs numériques de cette image de synthèse sous forme de fichier ou d'ensemble de données numériques.

Le codage de chaque image élémentaire successive selon une valeur d'index représentative du contenu de cette image élémentaire permet de restreindre sensiblement le volume ou le débit d'information dynamique nécessaire à l'affichage et d'améliorer, en conséquence, la fluidité de l'affichage de synthèse 3D.

Le procédé de codage objet de l'invention est en outre remarquable en ce qu'il consiste à associer la valeur d'index d'un groupe d'images élémentaires à une valeur d'adresse des ressources de calcul des valeurs numériques de l'image de synthèse tridimensionnelle.

Ceci permet d'affecter à chacune des ressources de calcul de ces valeurs numériques un groupe d'images élémentaires spécifiques en fonction de leur contenu et d'assurer ainsi une segmentation spatiale par contenu de l'image de synthèse tridimensionnelle.

Un tel mode opératoire permet de réduire sensiblement l'effet saccadé de l'affichage des images de synthèse 3D de l'art antérieur, par suppression efficace du problème de latence.

Le système d'affichage sur un écran d'une maquette numérique d'un objet sous forme d'une image de synthèse, au moyen d'un module applicatif comportant une interface utilisateur, objet de l'invention, opère sur un module applicatif délivrant, à partir de la maquette numérique, un modèle de cet objet formé par un flux d'éléments d'image à une ressource de calcul d'une image tridimensionnelle affichable sur cet écran.

Il est remarquable en ce qu'il inclut au moins des ressources de filtrage du flux d'éléments d'image, insérés en entrée de la ressource de calcul d'image tridimensionnelle, ces ressources de filtrage comportant un module de discrimination, dans le flux d'éléments d'image, d'images élémentaires chacune constitutive d'au moins une partie de l'image à afficher, un module de codage de chaque image élémentaire successive, selon une valeur d'index représentative du contenu de cette image élémentaire, ces valeurs d'index étant délivrées à la ressource de calcul d'image tridimensionnelle. Ceci permet d'augmenter la fluidité de l'affichage par l'écran d'affichage, par restitution du contenu de chaque image élémentaire par la ressource de calcul d'image tridimensionnelle.

En particulier, le système objet de l'invention est remarquable en ce que la valeur d'index est une valeur numérique obtenue par application d'une fonction de hachage à chaque image élémentaire successive.

En outre, cette valeur d'index est une valeur numérique représentative de l'écart spatio-temporel de deux images élémentaires successives homologues comprises dans deux vues successives de cet objet.

Selon un autre aspect remarquable du système objet de l'invention, la ressource de calcul d'une image tridimensionnelle est constituée par une pluralité de cartes graphiques 3D connectées en parallèle entre les ressources de filtrage et l'écran. Chaque carte graphique comporte une adresse d'accès spécifique et chaque valeur d'index représentative du contenu de chaque image élémentaire successive d'un groupe d'images élémentaires constitutif de tout ou partie de l'image de l'objet à afficher est associée à une valeur d'adresse d'accès spécifique de l'une des cartes graphiques.

Ceci permet d'affecter à chacune des cartes graphiques un groupe d'images élémentaires spécifiques en fonction de leur contenu et d'assurer ainsi une segmentation spatiale par contenu de l'affichage par masquage et une accélération de la fluidité de l'affichage.

Selon un autre aspect remarquable, le module de codage de chaque image élémentaire selon une valeur d'index représentative du contenu de chaque image élémentaire comprend des ressources de corrélation d'une pluralité d'images élémentaires successives à la même adresse de mémorisation et de même valeur d'index, cette valeur d'index représentative de cette image élémentaire respectivement d'un groupe d'images élémentaires étant transmise aux ressources de calcul d'image tridimensionnelle.

Selon un autre aspect remarquable, les ressources de filtrage comportent en outre un module d'inhibition des ressources de corrélation pour toute image élémentaire ou groupe d'images élémentaires reconnu comme corrélé à la même adresse. Ceci permet de transmettre une valeur d'index liée à cette adresse aux ressources de calcul d'image tridimensionnelle et d'accélérer l'affichage.

Le système d'affichage objet de l'invention est enfin remarquable en ce qu'il inclut en outre une ressource d'apprentissage de la loi d'évolution, lors de l'introduction d'une modification d'un point de vue de l'image de l'objet, à partir d'un périphérique jouant le rôle d'interface utilisateur. Ceci permet d'anticiper les résultats de calcul et de réduire le temps de calcul du module applicatif.

Le temps de calcul du module applicatif est ainsi rendu sensiblement indépendant de la capacité réelle de ce dernier à calculer des images successives de cet objet.

Le procédé de codage et le système d'affichage sur un écran d'une maquette numérique d'un objet sous forme d'une image de synthèse, objet de l'invention, trouvent application à tout module applicatif dans le domaine d'activité scientifique, industrielle ou ludique dans le domaine des jeux vidéo ou en ligne impliquant un affichage sur écran d'une maquette numérique sous forme d'une image de synthèse 3D, notamment dans le cadre d'un affichage 3D impliquant un dialogue interactif avec un utilisateur de ce module applicatif.

Ils seront mieux compris à la lecture de la description et à l'observation des dessins ci-après dans lesquels, outre les figures 1a et 1b relatives à l'art antérieur :

- la figure 2a représente, à titre illustratif, un organigramme des étapes essentielles du procédé de codage sous forme d'un fichier ou ensemble de données numériques d'image de synthèse tridimensionnelle d'une maquette numérique d'un objet, conformément à l'objet de la présente invention ;
- la figure 2b représente, à titre illustratif, un mode de mise en oeuvre préférentiel détaillé non limitatif du procédé de codage objet de l'invention représenté en figure 2a ;
- la figure 3a représente, à titre illustratif, un système d'affichage sur un écran d'une maquette numérique sous forme d'une image de synthèse, conforme à l'objet de la présente invention ;
- la figure 3b représente, à titre illustratif, un premier mode de mise en oeuvre préférentiel du système objet de l'invention, sous forme d'une architecture client/serveur ;
- la figure 3c représente, à titre illustratif, un deuxième mode de mise en oeuvre préférentiel du système objet de l'invention représenté en figure 3a dans lequel les ressources de calcul de l'image de synthèse 3D sont constituées par une pluralité de cartes graphiques 3D connectées en parallèle ;
- la figure 4 représente, à titre illustratif, le mode opératoire d'un système objet de l'invention tel que représenté en figure 3a, 3b ou 3c ;
- la figure 5 représente, à titre illustratif, un système objet de l'invention, équipé d'une interface utilisateur et d'un module d'apprentissage de la loi d'évolution, lors de l'introduction d'une modification, d'un point de vue de l'image de l'objet, à partir d'un périphérique jouant le rôle de cette interface utilisateur.

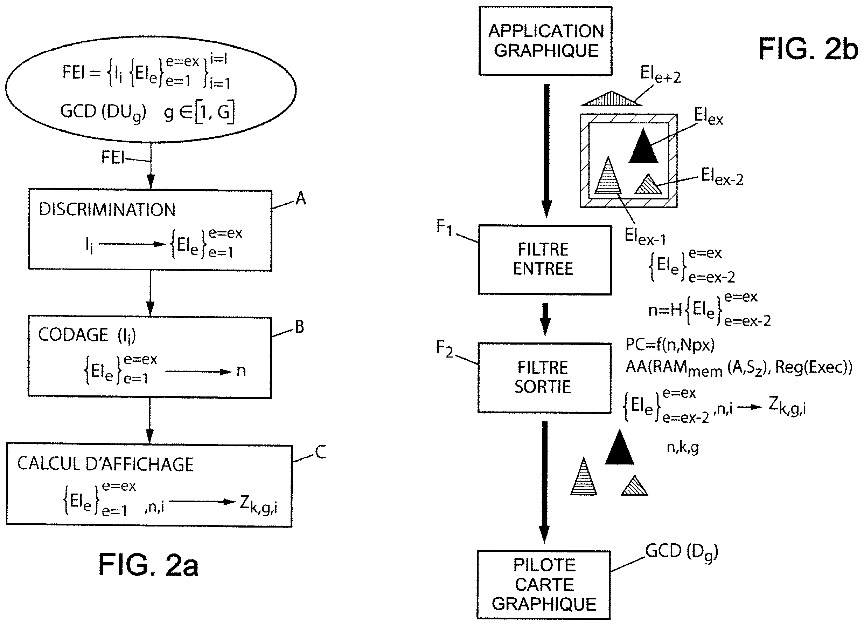

Une description plus détaillée du procédé de codage sous forme d'un fichier numérique d'images de synthèse tridimensionnelles d'une maquette numérique d'un objet à partir d'un modèle de cet objet formé par un flux d'éléments d'image délivré par un module applicatif à partir de cette plaquette numérique, sera maintenant donnée en liaison avec les figures 2a et 2b.

En référence à la figure 2a, on note le flux d'éléments d'image :

$$FEI = \left\{ I_i \left\{ EI_e \right\}_{e=1}^{e=ex} \right\}_{i=1}^{i=I}.$$

Le procédé objet de l'invention s'applique en effet à tout flux d'éléments d'image comportant un nombre quelconque d'images $I_i$, chaque image successive comportant des éléments d'image $EI_e$, chacun formé par une figure géométrique appropriée comportant des caractéristiques de forme, de couleur, de luminance et/ou d'orientation par rapport à un trièdre de référence de représentation 3D déterminé. La forme de chaque élément d'image $EI_e$ peut être quelconque mais dans le cadre de l'application du procédé objet de l'invention, la forme représentée est triangulaire selon les normes en vigueur en matière de synthèse d'image.

Le procédé objet de l'invention s'applique bien entendu, compte tenu d'un dispositif d'affichage noté $DU_g$ où g désigne une ou plusieurs adresses du dispositif d'affichage DU en particulier d'adresses physiques de ce dernier.

On comprend en particulier que pour la mise en oeuvre du procédé objet de l'invention, ce dernier peut être exécuté soit à partir d'un seul dispositif d'affichage ou au contraire à partir d'une pluralité de dispositifs d'affichage et de pilotes de dispositifs d'affichage GCD ($DU_g$) correspondants. En ce qui concerne le flux d'éléments d'image FEI, on rappelle que ce dernier correspond à des données numériques c'est-à-dire des successions de bits parmi lesquels il est bien entendu possible de discriminer des images successives $I_i$, et, dans ces images successives, des éléments d'images $EI_e$ précédemment mentionnés.

En référence à la figure 2a, le procédé objet de l'invention consiste en une étape A, à discriminer dans le flux d'éléments d'image FEI des images élémentaires constitutives chacune d'au moins une partie de l'image de synthèse tridimensionnelle à afficher.

Selon une caractéristique remarquable du procédé objet de l'invention, on indique que chaque image élémentaire est constituée par un sous ensemble d'éléments d'image $EI_e$.

Ainsi que représenté à l'étape A de la figure 2a, l'opération de discrimination consiste alors à mettre en évidence dans chaque image successive $I_i$, une pluralité d'images élémentaires notées chacune $\left\{ EI_e \right\}_{e=1}^{e=ex}$.

On note en particulier, que toute image élémentaire, sous-ensemble d'éléments d'image, inclut au moins un autre sous-ensemble d'éléments d'image et en particulier au moins un élément d'image, alors que chaque image $I_i$ inclut toutes les images élémentaires, sous-ensembles d'éléments d'image correspondants.

Ainsi le nombre d'éléments d'image formant chaque image élémentaire n'est pas fixé et la définition de chaque image élémentaire est adaptative en fonction du contenu de ces dernières, ainsi qu'il sera décrit ultérieurement dans la description. On comprend ainsi que la valeur de ex, dernier élément d'image d'une image élémentaire peut être quelconque.

L'opération de discrimination précitée est effectuée sur le flux d'éléments d'image entrant par image $I_i$. Cette opération peut être effectuée sur critère temporel, spatial ou de même caractéristique d'éclairement, ce qui permet de discriminer, dans le flux d'éléments d'image précité, des zones d'affichage utiles relatives à un contenu déterminé *a priori*.

L'étape A est alors suivie d'une étape B consistant à coder chaque image élémentaire successive selon une valeur d'index représentative du contenu de l'image élémentaire considérée.

A l'étape B de la figure 2a, cette opération est représentée par la relation :

$$\{EI_e\}_{e=1}^{e=ex} \rightarrow n\ .$$

Dans la relation précédente, n désigne la valeur d'index représentative du contenu de l'image élémentaire $\{EI_e\}_{e=1}^{e=ex}$ .

Selon un aspect remarquable du procédé objet de l'invention, le critère de codage selon le contenu de chaque image élémentaire peut être un critère de reconnaissance de forme appliqué aux zones d'affichage utiles précitées et/ou de succession temporelle de chaînes de bits dans le flux d'éléments d'image FEI et/ou de positionnement tridimensionnelle dans l'image $I_i$ de chaque élément d'image considéré. On conçoit en effet, alors que chaque élément d'image $EI_e$ comporte nécessairement un paramètre de positionnement et d'orientation 3D dans l'image $I_i$ considérée, chaque image élémentaire sous-ensemble d'éléments d'image, peut alors être également positionnée et également orientée par continuité.

L'étape B est alors suivie d'une étape C consistant à calculer les valeurs numériques de l'image de synthèse tridimensionnelle à afficher, à partir de la valeur d'index n représentative du contenu de chaque image élémentaire et à mémoriser les valeurs numériques correspondantes de l'image de synthèse sous forme de fichier numérique.

A l'étape C de la figure 2a, l'opération de calcul d'affichage est notée pour une image élémentaire $\{EI_e\}_{e=1}^{e=ex}$ codée selon un index n et appartenant à une image $I_i$ :

$$\{EI_e\}_{e=1}^{e=ex}, n, i \rightarrow Z_{k,g,i}\ .$$

On comprend en effet, que compte tenu du contenu codé de l'index n affecté à chaque image élémentaire considérée, l'on associe ainsi une zone d'affichage dans l'image, zone $Z_{k,i}$ compte tenu du contenu précité et bien entendu de l'évolution de ce dernier d'une image à l'image suivante.

En effet, chaque zone d'affichage dans l'image $Z_{k,i}$ est ainsi affectée à chaque image élémentaire correspondante notamment sur critère de similarité de l'image élémentaire considérée appartenant à l'image courante d'indice i vis-à-vis de l'image élémentaire correspondante appartenant à l'image suivante d'indice i+1.

Le critère de similarité des images élémentaires considérées est représenté par la relation :

$$\{EI_e\}_{e=1}^{e=ex}, i \leftrightarrow \{EI_e\}_{e=1}^{e=ex}, i+1\ .$$

Le critère de similarité précité est soit un critère adaptatif établi à partir de l'identité des chaînes de bits représentatifs de chaque élément d'image constitutif de l'image élémentaire considérée, soit un critère de distance visuelle d'une ou plusieurs chaînes de bits représentatives de l'image élémentaire appartenant à l'image courante vis-à-vis de l'image élémentaire appartenant à l'image suivante.

Selon un autre aspect particulièrement remarquable du procédé objet de l'invention, ce dernier consiste, à l'étape C précitée, à associer la valeur d'index d'un groupe d'images élémentaires à une valeur d'adresse des ressources de calcul des valeurs numériques de l'image de synthèse tridimensionnelle.

A l'étape C de la figure 2a, cette opération est représentée par l'affectation de l'indice g à la zone d'affichage $Z_{k,i}$ laquelle devient alors $Z_{k,g,i}$ où g désigne l'adresse d'une ressource de calcul des valeurs numériques de l'image de synthèse tridimensionnelle et en particulier du dispositif d'affichage DU$_g$ ou du pilote de carte graphique GCD(DU$_g$).

Ce mode opératoire apparaît particulièrement avantageux dans la mesure où il permet d'affecter à chacune des ressources de calcul des valeurs numériques, un groupe d'images élémentaires spécifiques en fonction de leur contenu et d'assurer ainsi une segmentation spatiale par contenu de l'image de synthèse tridimensionnelle reconstituée.

Un exemple de mise en oeuvre du procédé de codage objet de l'invention sera maintenant donné en liaison avec la figure 2b.

Sur la figure précitée on a représenté l'étape de discrimination dans le flux d'éléments d'image d'images élémentaires chacune constitutive d'au moins une partie de l'image affichée par la mise en oeuvre d'un filtre d'entrée F$_1$ lequel est réputé, à titre de pur exemple non limitatif, exécuter la discrimination d'une image élémentaire formée par des éléments d'image EI$_{ex-1}$, EI$_{ex}$ et EI$_{ex-2}$. Cette discrimination est représentée de manière symbolique par l'inclusion des trois éléments d'image précités dans une aire fermée représentée par des hachures.

Le codage est exécuté par le même filtre d'entrée F$_1$ pour l'image élémentaire précitée selon la valeur d'index n représentative du contenu de l'image élémentaire $\left\{EI_e\right\}_{e=ex-2}^{e=ex}$.

Selon une caractéristique de mise en oeuvre particulièrement avantageuse du procédé objet de l'invention, la valeur d'index peut être obtenues par l'application d'une fonction de hachage à l'image élémentaire précitée. Cette opération est représentée au niveau du filtre F$_1$, filtre d'entrée, par l'opération :

$$n = H\left\{EI_e\right\}_{e=ex-2}^{e=ex}.$$

Dans cette relation H désigne la fonction de hachage appliquée à l'ensemble des éléments d'image constitutifs de l'image élémentaire considérée.

Enfin, l'opération de calcul des valeurs numériques de l'image de synthèse tridimensionnelle à partir de la valeur d'un index n représentatif du contenu de chaque image élémentaire est mise en oeuvre, par exemple, par un filtre de sortie référencé F$_2$, lequel permet de faire correspondre à l'image élémentaire précitée $\left\{EI_e\right\}_{e=ex-2}^{e=ex}$, n,i, c'est-à-dire à l'image élémentaire à laquelle est associée la valeur d'index n pour l'image d'indice i considérée, une zone d'affichage Z$_{k,g,i}$ par affectation à chacune des ressources de calcul des valeurs numériques d'un groupe d'images élémentaires spécifiques en fonction de leur contenu et assurer ainsi une segmentation spatiale par contenu de l'image de synthèse tridimensionnelle.

On comprend bien sûr qu'à l'adresse g des ressources de calcul de l'image de synthèse c'est-à-dire de l'adresse du pilote de la carte graphique GCD(D$_g$) peut correspondre une ou plusieurs cartes graphiques ainsi qu'il sera décrit ultérieurement dans la description.

Le procédé objet de l'invention, tel que décrit en liaison avec la figure 2b, est en outre remarquable en ce qu'il peut consister à calculer un coefficient de priorité d'utilisation dans l'affichage, noté PC, pour chaque image élémentaire EI$_e$, à partir de la valeur d'index n précitée. En effet, tout module applicatif est susceptible d'obéir à des normes différentes, pour ce qui concerne le choix dans la définition des ensembles et sous-ensemble d'éléments d'image formant chaque image élémentaire, et, finalement la présentation des images élémentaires successives à la carte graphique d'affichage.

Le coefficient de priorité PC précité est une fonction de la valeur de l'index n calculé et du nombre de pixels Npx de chaque image élémentaire considérée, selon la relation :

$$PC = f(n, Npx).$$

La mise en oeuvre du coefficient de priorité PC précité permet d'optimiser et de réduire le temps d'accès de l'image élémentaire aux ressources d'affichage de la carte graphique, pour exécuter l'affichage précité.

Ceci permet de réduire encore le temps d'affichage global de l'ensemble.

Enfin, dans un mode de mise en oeuvre préférentiel non limitatif du procédé objet de l'invention, celui-ci peut en outre consister, avantageusement, à calculer une valeur de prédiction de l'exécution future par le module applicatif de chaque image élémentaire du point de vue de l'affichage. Cette valeur de prédiction Pr est fonction du coefficient de priorité PC, Pr(PC), et peut être calculée comme un nombre de cycles d'exécution d'affichage pour chaque image élémentaire considérée.

Le procédé objet de l'invention peut ensuite consister, selon un aspect remarquable de ce dernier, à adapter les données d'exécution du module applicatif, par exécution d'une fonction permettant d'adapter les paramètres d'espace mémoire vive utilisée par le module applicatif, paramètres tels que adresse et étendue de la zone mémoire, noté RAM$_{mem}$ (A, S$_z$) où A désigne l'adresse et S$_z$ l'étendue de la zone mémoire vive précitée, et des registres d'exécution du module applicatif au niveau du processeur d'exécution du module applicatif, noté Req(Exec) où Exec désigne le contexte d'exécution de l'instruction du module applicatif par le registre correspondant.

La fonction d'adaptation correspondante calculée à partir du coefficient de priorité PC est notée :

$$AA(RAM_{mem}(A,S_z), Req(Exec)),$$

où A désigne l'adresse de l'image élémentaire en mémoire vive, $S_z$ désigne l'étendue de mémoire vive utilisée pour l'affichage de l'image élémentaire considérée dans la zone d'affichage d'adresse z, Exec désigne le contexte d'exécution de l'instruction du module applicatif.

Le passage entre la valeur de prédiction Pr(PC) et les paramètres précités de la fonction d'adaptation peut être exécuté par l'intermédiaire d'une table de consultation, gérée de manière dynamique.

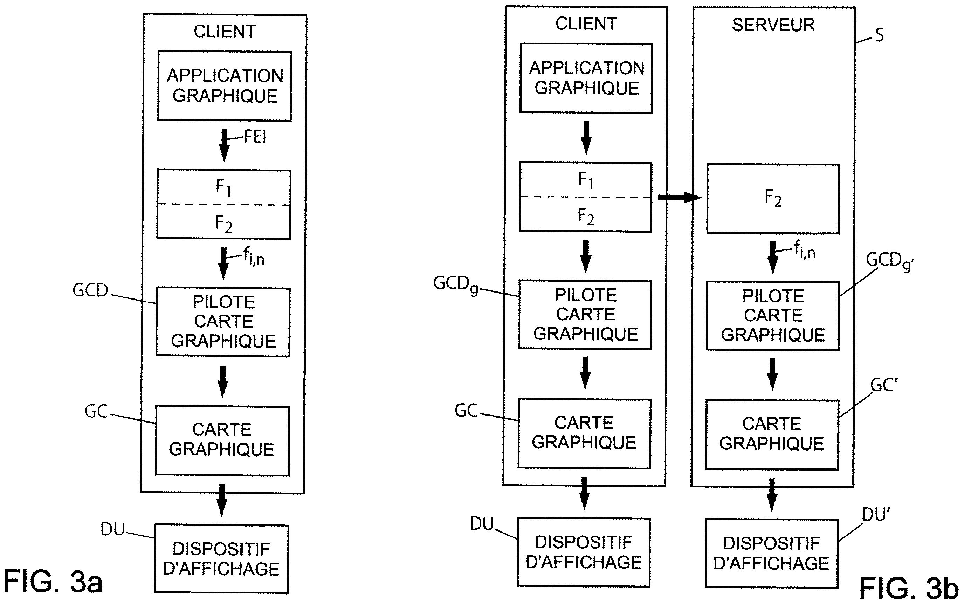

Une description plus détaillée d'un système d'affichage sur un écran d'une maquette numérique d'un objet sous forme d'une image de synthèse tridimensionnelle à partir d'un module applicatif comportant une interface utilisateur conforme à l'objet de la présente invention, sera maintenant donnée en liaison avec la figure 3a et les figures suivantes.

La description du dispositif objet de l'invention en liaison avec la figure 3a, est donnée dans le cadre d'un dispositif client opérant une application graphique délivrant un flux, le flux d'éléments d'image FEI précédemment décrit dans la description.

Outre bien entendu le pilote de carte graphique GCD et la carte graphique proprement dite GC constitutive d'un terminal sous la forme d'une architecture client par exemple, il comporte également un dispositif d'affichage DU de manière classique.

Selon un aspect remarquable du système objet de l'invention, celui-ci comporte un module de filtrage du flux d'éléments d'image FEI inséré en entrée des ressources de calculs d'image tridimensionnelle, en particulier inséré entre l'application graphique délivrant le flux d'éléments d'image FEI et le pilote de carte graphique GCD.

Ainsi que décrit précédemment en liaison avec la mise en oeuvre du procédé objet de l'invention, on indique que le module de filtrage comporte avantageusement un module de discrimination, le filtre $F_1$, dans le flux d'éléments d'images FEI d'images élémentaires chacune constitutive au moins d'une partie de l'image à afficher. Chaque image élémentaire constitue un sous-ensemble d'éléments d'image ainsi que décrit précédemment dans la description.

Il comporte également un module de codage de chaque image élémentaire successive, le filtre $F_2$, tel que décrit précédemment dans la description, lequel exécute un codage selon une valeur d'index n représentative du contenu de l'image élémentaire considéré.

Les valeurs d'index n sont délivrées au module de calcul image tridimensionnelle et en particulier au pilote de carte graphique GCD.

On comprend en particulier que, pour une image $I_i$ courante et une image $I_{i+1}$ suivante, le mode opératoire du système d'affichage objet de l'invention permet, du fait de la transmission de la valeur d'index n, de retrouver des images élémentaires successives et en particulier les éléments d'image constitutifs de celle-ci. On comprend bien sur que les éléments d'image et les images élémentaires correspondants sont mémorisés dans un fichier numérique conformément au procédé de codage objet de l'invention et que la valeur de l'index n permet bien entendu, par simple adressage à une adresse liée à la valeur de n, de retrouver l'élément d'image ou l'image élémentaire constituée de ces derniers.

Ce mode opératoire permet d'augmenter notablement la fluidité de l'affichage par l'écran d'affichage, le flux de données entre le module de filtrage en particulier le filtre $F_2$ et le pilote de carte graphique GCD étant pour cette raison noté $f_{i,n}$.

On conçoit que la fluidité de l'affichage par l'écran d'affichage, en particulier par le dispositif d'affichage DU par l'intermédiaire de la carte graphique GC, permet d'augmenter la fluidité de l'affichage par ce dernier par restitution du contenu de chaque image élémentaire par le moyen de calcul d'images tridimensionnelles. Cette restitution est notamment effectuée à partir de la valeur de l'index n.

En particulier, la valeur d'index précitée est une valeur numérique obtenue par application d'une fonction de hachage à au moins chaque image élémentaire successive, ainsi que décrit précédemment dans la description.

La valeur d'index n peut être constituée par une valeur numérique représentative de l'écart spatio-temporel de deux images élémentaires successives homologues comprises dans deux vues successives de l'objet.

En particulier, on comprend que, alors que le calcul peut être effectué sur chaque image courante et image suivante successive, ainsi que mentionné précédemment dans la description, la valeur représentative de l'écart spatio-temporel n'est alors prise en compte que lors d'un changement significatif de cette valeur d'écart, en particulier pour deux images élémentaires successives homologues comprises dans deux vues successives de l'objet.

Il est ainsi possible de minimiser le volume d'informations nécessaires au codage des images tridimensionnelles selon la différence représentative de cet écart spatio-temporel, laquelle est traduite en terme de valeur d'index.

Une description plus détaillée d'un système d'affichage conforme à l'objet de la présente invention dans le cadre d'une architecture client/serveur sera maintenant donnée en liaison avec la figure 3b.

L'architecture client/serveur précitée, peut être mise en oeuvre soit dans le cadre d'application monoposte et/ou multiposte.

Globalement, le système objet de l'invention peut être agencé de manière à comporter une architecture client correspondant sensiblement à celle représentée en figure 3a dans laquelle le module de codage, c'est-à-dire le filtre $F_2$, peut être constitué par un filtre directement dédié au pilote de la carte graphique $GCD_g$.

Dans ces conditions, le module de codage formé par ledit filtre $F_2$ peut être directement dédié au pilote de la carte graphique du terminal client correspondant.

En outre, en version monoposte ou multiposte, un élément serveur S peut être directement associé à l'élément client précité, un module de codage $F_2$ étant directement en liaison avec le module de discrimination formé par le filtre $F_1$. Dans ces conditions, le module de codage $F_2$ permet alors de délivrer le flux d'éléments d'image traité $f_{i,n}$ à un système constitué par un pilote de carte graphique $GCD_{g'}$, une carte graphique proprement dite GC' et bien entendu un dispositif d'affichage DU'.

En raison de la caractéristique d'élément serveur de l'ensemble S ainsi constitué, il est possible de prévoir une application multiposte pour l'ensemble.

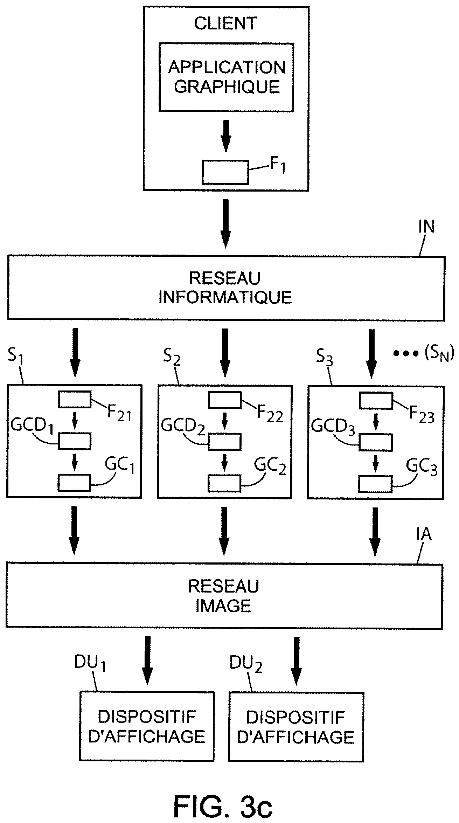

Un mode de mise en oeuvre préférentiel du système d'affichage sur un écran d'une maquette numérique d'un objet sous forme d'une image de synthèse tridimensionnelle, sous forme d'architecture client/serveur sera maintenant décrit en liaison avec la figure 3c.

Dans cette situation, on retrouve l'architecture client consistant essentiellement en l'application graphique proprement dite et en au moins le module de discrimination formé par le filtre $F_1$ précédemment décrit dans la description.

L'ensemble est connecté par l'intermédiaire d'un réseau informatique IN à une pluralité de serveurs $S_1$, $S_2$ à $S_3$ de manière non limitative $S_N$ non représenté au dessin.

Chaque serveur $S_1$, $S_2$, $S_3$ à $S_N$ comporte avantageusement la structure de serveur S représentée en figure 3b à savoir un module de codage formé par un filtre $F_{21}$, un pilote de carte graphique $GCD_1$ et une carte graphique proprement dite $GC_1$ pour le serveur $S_1$, cette structure étant répétée par changement des indices 1 en indices 2 et 3 pour les serveurs $S_2$, $S_3$ à $S_N$.

Chaque serveur $S_1$, $S_2$, $S_3$ à $S_N$ est lui-même connecté à un réseau image IA permettant la transmission des données d'image et en particulier des flux d'éléments d'image traités $f_{i,n}$ relatifs à chacun des serveurs précités $S_1$ à $S_N$.

Au réseau image IA est en outre connecté un ou plusieurs dispositifs d'affichage notés de manière non limitative $DU_1$ à $DU_2$ sur la figure 3c.

En référence à la figure 3c, on comprend que le module de calcul d'image tridimensionnelle est constitué par une pluralité de cartes graphiques 3D, $GC_1$, $GC_2$, $GC_3$ à $GC_N$ lesquelles sont alors connectées en parallèle entre le module de filtrage $F_1$ et l'écran constitué par le dispositif d'affichage $DU_1$ ou $DU_2$.

Selon un aspect remarquable du système objet de l'invention, chaque carte graphique précitée comporte une adresse d'accès spécifique g=1, 2, 3 ou N, chaque valeur d'index n représentatif du contenu de chaque image élémentaire successive d'un groupe d'images élémentaires constitutif du tout ou partie de l'image de l'objet à afficher étant associée à une valeur d'adresse d'accès spécifique de l'une des cartes graphiques.

Le mode opératoire précité est représenté par la mise en oeuvre du filtre de sortie $F_2$ de la figure 2b et par la relation :

$$\{EI_e\}_{e=ex-2}^{e=ex}, n, i \rightarrow Z_{k,g,i}$$

où g désigne l'adresse d'accès spécifique précitée, $Z_k$ désigne une zone d'affichage correspondant à un groupe d'images élémentaires constitutives de tout ou partie de l'image de l'objet affiché et n désigne bien entendu la valeur de l'index représentatif du contenu de chaque image élémentaire successive de ce groupe d'image correspondant.

Ce mode opératoire permet d'affecter à chacune des cartes graphiques un groupe d'image élémentaire spécifique en fonction de leur contenu et d'assurer ainsi une segmentation spatiale par contenu de l'affichage par masquage et obtenir ainsi une accélération de la fluidité de l'affichage.

On comprend, en particulier, que la notion de masquage recouvre l'affichage du groupe d'images considéré pour l'adresse d'accès spécifique g ce qui implique bien entendu le masquage de tous les groupes d'images distincts pour la même adresse d'accès spécifique g.

L'opération de masquage peut ainsi être représentée par la relation symbolique :

$n \leftrightarrow \{g,k\}$.

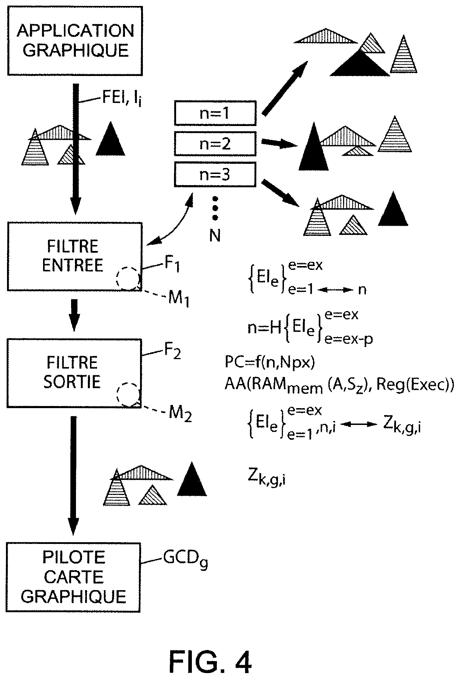

Un mode opératoire correspondant est représenté en figure 4 pour l'un des serveurs $S_1$ à $S_3$ représenté au dessin de la figure 3c.

Sur la figure 4 précitée on comprend que l'existence du réseau informatique IN et du réseau image IA ne modifient en rien le filtre d'entrée F1 ou le filtre de sortie $F_2$ tels que représentés au dessin de la figure 4.

En ce qui concerne le mode opératoire pour le calcul de l'index n, valeur numérique représentative de l'écart spatio-temporel de deux images élémentaires successives homologues comprises dans deux vues successives de l'objet, on indique que le module précité comprend un module $M_1$ de corrélation d'une pluralité d'images élémentaires successives à la même adresse de mémorisation et bien entendu de même valeur d'index.

On comprend en particulier que des images élémentaires successives, présentant un même contenu, présentent une valeur d'inter-corrélation élevée, ce qui justifie, d'une part, leur mémorisation à une même adresse, et, d'autre part, le calcul d'une même valeur d'index par l'intermédiaire de l'application de la fonction de hachage à cette image ou à ces images élémentaires.

Le mode opératoire précité permet bien entendu de prendre la valeur d'index n attribuée à ces dernières, c'est-à-dire à l'image élémentaire ou à un groupe d'images élémentaires, comme valeur représentative du contenu des images précitées et de leur adresse de mémorisation.

En particulier, le module $M_1$ permet la mise en oeuvre de toutes les fonctions décrites dans le cadre de la mise en oeuvre du procédé illustré et décrit en liaison avec la figure 2b, en particulier, le calcul du coefficient de priorité PC, la valeur prédictive Pr(PC) et la fonction d'adaptation AA($RAM_{mem}(A,S_z)$, Req(Exec)).

Enfin, le filtre de sortie $F_2$ comporte avantageusement un module $M_2$ d'inhibition du module de corrélation pour toute image élémentaire ou groupe d'images élémentaires reconnues comme corrélées à la même adresse.

Pour la raison invoquée précédemment, on comprend que la corrélation d'images élémentaires ou de groupes d'images élémentaires à la même adresse de mémorisation permet de conclure à leur contenu semblable et à la transmission de la valeur d'index n correspondante au module de calcul d'image tridimensionnelle ce qui permet bien entendu d'accélérer l'affichage.

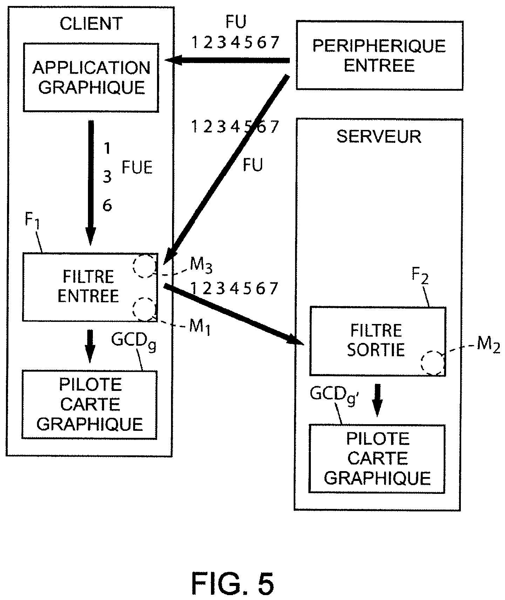

Une description plus détaillée d'un mode de mise en oeuvre préférentiel du système objet de l'invention, lorsque ce système est particulièrement dédié à un système permettant à un utilisateur d'introduire des modifications de la représentation tridimensionnelle d'une image de synthèse sera maintenant donnée en liaison avec la figure 5.

La modification introduite par un utilisateur du point de vue de l'image de l'objet est exécutée par ce dernier à partir d'un équipement périphérique d'entrée jouant le rôle d'interface utilisateur. Cette interface utilisateur peut être constituée par soit une manette de jeu, soit une commande de robot articulé dans le cas d'une intervention chirurgicale à distance ou télécommandée ou finalement toute intervention assistée d'un utilisateur sur une application graphique en présentation 3D par image de synthèse.

Dans ce but, le système objet de l'invention comprend en outre un module $M_3$ d'apprentissage de la loi d'évolution lors de l'introduction d'une modification d'un point de vue de l'image de l'objet à partir de l'interface utilisateur précitée formée par l'équipement périphérique dans le but d'anticiper les résultats de calcul et de réduire le temps de calcul du module applicatif ou application graphique.

Ainsi que représenté en figure 5, le flux utilisateur introduit à partir de l'interface périphérique est notée :

FU = 1, 2, 3, 4, 5, 6, 7,

où la chaîne des caractères 1 à 7 représente, de manière illustrative, le flux utilisateur émis par ce dernier.

Le processus de traitement pour exécuter l'apprentissage de la loi d'évolution consiste alors à échantillonner le flux utilisateur FU venu de l'interface utilisateur à une fréquence d'échantillonnage inférieure à celle du flux utilisateur émis. Par ce processus d'échantillonnage le module applicatif ou application graphique permet d'engendrer un flux utilisateur échantillonné FUE lequel par commodité est représenté par la séquence tronquée 1, 3, 6. Ce flux échantillonné FUE est alors transmis au filtre d'entrée $F_1$.

Le filtre d'entrée reçoit également le flux utilisateur FU directement transmis par l'interface utilisateur. Le filtre d'entrée $F_1$ procède alors à une comparaison entre le flux utilisateur FU et le flux utilisateur échantillonné FUE. La comparaison entre les flux précités est exécutée par identification d'éléments d'image par le module $M_3$. Cette comparaison s'énonce :

A un élément d'image $EI_e$ appartenant au flux échantillonné FUE correspond un élément d'image $EI_{e'}$ appartenant au flux FU émis par l'utilisateur.

La construction de la loi d'apprentissage est alors basée sur un critère de différence entre image ou élément d'image et mise en corrélation avec le flux utilisateur FU. Le module de comparaison et de construction de la loi d'apprentissage contenu dans le filtre $F_1$ permet alors de reconstruire une image IFU soit :

IFU = 1, 2, 3, 4, 5, 6, 7

du flux utilisateur, ce qui bien entendu permet, au niveau du filtre de sortie $F_2$ recevant l'image IFU du flux utilisateur, d'anticiper la réponse qui aurait été donnée par l'application graphique au flux utilisateur FU.

L'invention couvre en outre un programme d'ordinateur comportant une suite d'instructions mémorisée sur un support de mémorisation pour la mise en oeuvre par un ordinateur ou par un système d'affichage sur écran d'une maquette numérique, au moyen d'un module applicatif comportant une interface utilisateur, ce module applicatif délivrant à partir de cette maquette numérique un modèle de cet objet formé par un flux d'éléments d'image à un module de calcul d'une image tridimensionnelle affichable sur un écran, remarquable en ce que, lors de son exécution, lesdites instructions exécutent les étapes de discrimination, de codage et de calcul des valeurs numériques de l'image de synthèse tridimensionnelle à partir de la valeur d'index représentative du contenu de chaque image élémentaire et la mémorisation de ces valeurs numériques de cette image de synthèse sous forme de fichier numérique du procédé tel que décrit en liaison avec les figures 2a et 2b.

Lorsque ce programme est modulaire, il comporte au moins un module logiciel $M_1$ de discrimination dans un flux d'éléments d'images, d'images élémentaires chacune constitutive d'une partie de l'image à afficher et de codage de chaque image élémentaire selon une valeur d'index représentative du contenu de chaque image élémentaire. Le module logiciel $M_1$ est implanté dans le filtre d'entrée $F_1$ d'un élément client d'une architecture client/serveur ainsi que décrit et représenté en figures 4 et 5.

De même, il comporte un module logiciel $M_2$ de calcul de valeurs numériques de l'image de synthèse tridimensionnelle à partir de la valeur d'index représentative du contenu de chaque image élémentaire. Ainsi que représenté en figures 4 et 5, le module logiciel $M_2$ est implanté dans le filtre de sortie $F_2$ d'un élément serveur d'une architecture client/serveur.

Enfin ce programme d'ordinateur comporte un module logiciel $M_3$ d'apprentissage de la loi d'évolution, lors de l'introduction d'une modification d'un point de vue de l'image à partir d'une interface utilisateur, ce module logiciel $M_3$ étant implanté dans un élément client d'une architecture client/serveur et permettant d'anticiper les résultats de calcul et de réduire le temps de calcul de l'application graphique, ainsi que représenté en figure 5.

Le procédé et le système d'affichage d'images de synthèse objets de l'invention ont été mis en oeuvre et ont fait l'objet d'essais comparatifs, dont les résultats sont donnés ci-après.

Les essais précités ont consisté en la mise en oeuvre du module applicatif CATIA®, lequel permet la définition d'images élémentaires comportant chacune 10 millions d'éléments d'image constitués par des triangles, et l'exécution de ce module applicatif à partir d'une station de travail équipée d'un processeur INTEL® Pentium IV cadencé à 3 GHz et d'une carte graphique nVIDIA® Fx 3000, à titre d'essai de référence en l'absence de tout codage conformément à l'invention. Les essais comparatifs en vitesse d'affichage exprimée en nombre d'images par seconde sont donnés, par rapport à l'essai de référence pour un codage par :
Indexation n, indexation n + coefficient de priorité PC
selon le tableau ci-après.

| Essai | Vitesse d'affichage |
|---|---|
| Essai de référence | 2 images / seconde |
| Indexation : n | 3 images / seconde : gain 50 % |
| Indexation : n + PC | 4 images / seconde : gain 100 % |

En outre, un essai distinct sur banc de contrôle (Benchmark en anglais) pour une indexation n + calcul du coefficient de priorité PC et fonction d'adaptation AA(RAM$_{mem}$(A, S$_z$), Req(Exec)) a montré un gain en vitesse d'affichage, en nombre d'images par seconde, de 400 %.

De même la mise en oeuvre d'un module d'apprentissage de la loi d'évolution d'un point de vue de l'image a permis de mettre en évidence un gain de vitesse d'affichage de 200 %. On comprend que les gains en vitesse précités sont cumulatifs.

**Revendications**

1. Système d'affichage sur un écran d'une maquette numérique d'un objet sous forme d'une image de synthèse, au moyen d'un module applicatif comportant une interface utilisateur, ledit module applicatif délivrant, à partir de ladite maquette numérique, un modèle dudit objet formé par un flux d'éléments d'image à un moyen de calcul d'une image tridimensionnelle affichable sur ledit écran, **caractérisé en ce que** ledit système comporte au moins des moyens de filtrage dudit flux d'éléments d'image, insérés en entrée dudit moyen de calcul d'image tridimensionnelle et comportant :

   - des moyens de discrimination (A), dans ledit flux d'éléments d'image, d'images élémentaires chacune constitutive d'au moins une partie de l'image à afficher ;

   **caractérisé en ce que** le système comprend en outre :

   - des moyens de codage (B) de chaque image élémentaire successive selon une valeur d'index représentative du contenu de ladite image élémentaire, obtenue par application d'une fonction de hachage à au moins chaque image élémentaire successive,
   lesdites valeurs d'index étant délivrées audit moyen de calcul d'image tridimensionnelle.

**2.** Système selon la revendication 1, **caractérisé en ce que** ladite valeur d'index est une valeur numérique représentative de l'écart spatio-temporel de deux images élémentaires successives homologues comprises dans deux vues successives dudit objet.

**3.** Système selon l'une des revendications 1 à 2, **caractérisé en ce que** lesdits moyens de calcul d'une image tridimensionnelle sont constitués par une pluralité de cartes graphiques (GC) 3D connectées en parallèle entre lesdits moyens de filtrage et ledit écran, chaque carte graphique (GC) comportant une adresse d'accès spécifique, chaque valeur d'index étant associée à une valeur d'adresse d'accès spécifique de l'une des cartes graphiques (GC), ce qui permet d'affecter à chacune des cartes graphiques (GC) un groupe d'images élémentaires spécifiques en fonction de leur contenu et d'assurer ainsi une segmentation spatiale par contenu de l'affichage par masquage et une accélération de la fluidité de l'affichage.

**4.** Système selon l'une des revendications 1 à 3 **caractérisé en ce que** lesdits moyens de codage (B), comprennent des moyens de corrélation ($M_1$) d'une pluralité d'images élémentaires successives à la même adresse de mémorisation et de même valeur d'index, ladite valeur d'index représentative de ladite image élémentaire respectivement dudit groupe d'images élémentaires étant transmis audit moyen de calcul d'image tridimensionnelle.

**5.** Système selon la revendication 4, **caractérisé en ce que** lesdits moyens de filtrage comportent en outre des moyens d'inhibition ($M_2$) desdits moyens de corrélation ($M_1$) pour toute image élémentaire ou groupe d'images élémentaires reconnu comme corrélé à la même adresse, ce qui permet de transmettre une valeur d'index liée à ladite adresse auxdits moyens de calcul d'image tridimensionnelle.

**6.** Système selon l'une des revendications 1 à 5, **caractérisé en ce qu'**il comporte en outre des moyens d'apprentissage ($M_3$) d'une loi d'évolution, lors de l'introduction d'une modification, d'un point de vue de l'image de l'objet à partir d'un périphérique jouant le rôle d'interface utilisateur.

**7.** Procédé de codage sous forme d'un fichier numérique d'image de synthèse tridimensionnelle d'une maquette numérique d'un objet, à partir d'un modèle dudit objet formé par un flux d'éléments d'images délivré par un module applicatif à partir de ladite maquette numérique, **caractérisé en ce qu'**il consiste au moins à :

- discriminer (A), dans ledit flux d'éléments d'images, des images élémentaires constitutives chacune d'au moins une partie de l'image de synthèse tridimensionnelle à afficher ;

**caractérisé en ce que** le procédé comprend en outre :

- coder (B) chaque image élémentaire successive selon une valeur d'index représentative du contenu de ladite image élémentaire obtenue par application d'une fonction de hachage à au moins chaque image élémentaire successive ;
- calculer les valeurs numériques de ladite image de synthèse tridimensionnelle à partir de ladite valeur d'index représentative du contenu de chaque image élémentaire et mémoriser lesdites valeurs numériques de ladite image de synthèse sous forme de fichier numérique.

**8.** Procédé selon la revendication 7, **caractérisé en ce que** celui-ci consiste en outre à associer ladite valeur d'index d'un groupe d'images élémentaires à une valeur d'adresse des ressources de calcul des valeurs numériques de ladite image de synthèse tridimensionnelle, ce qui permet d'affecter à chacune des ressources de calcul desdites valeurs numériques un groupe d'images élémentaires spécifiques en fonction de leur contenu et d'assurer ainsi une segmentation spatiale de l'image de synthèse tridimensionnelle.

**9.** Procédé selon l'une des revendications 7 ou 8, **caractérisé en ce qu'**il consiste à calculer un coefficient de priorité d'utilisation dans l'affichage pour chaque image élémentaire, à partir de la valeur d'index.

**10.** Procédé selon la revendication 9, **caractérisé en ce qu'**il consiste en outre à :

- calculer une valeur de prédiction en fonction du coefficient de priorité ;
- adapter les données d'exécution du module applicatif concernant la mémoire vive et les registres d'exécution mis en oeuvre par ledit module applicatif.

**11.** Programme d'ordinateur comportant une suite d'instructions mémorisée sur un support de mémorisation pour la mise en oeuvre du procédé selon l'une des revendications 7 à 10.

**Patentansprüche**

1. System zum Anzeigen eines numerischen Imitats eines Objekts in Form eines Synthesebilds auf einem Bildschirm mit Hilfe eines Anwendungsmoduls, das eine Benutzerschnittstelle aufweist, wobei das Anwendungsmodul ausgehend von dem numerischen Imitat ein von einem Bildelementfluss gebildetes Modell des Objekts zu einer 3D-Bildberechnungseinrichtung, die zur Berechnung eines auf dem Bildschirm anzeigbaren dreidimensionalen Bilds ist, schickt,
**dadurch gekennzeichnet, dass** das System zumindest Filtereinrichtungen zum Filtern des Bildelementflusses aufweist, die am Eingang der 3D-Bildberechnungseinrichtung eingebaut sind und aufweisen:

   - Unterscheidungseinrichtungen (A) zum Unterscheiden von Elementarbildern, von denen jedes mindestens für einen Teil des anzuzeigenden Bilds konstitutiv ist, in dem Bildelementfluss;

   **dadurch gekennzeichnet, dass** das System ferner aufweist:

   - Codierungseinrichtungen (B) zum Codieren jedes sukzessiven Elementarbilds gemäß einem für den Inhalt des Elementarbilds repräsentativen Indexwert, der durch Anwendung einer Zerhackungsfunktion auf mindestens jedes sukzessive Elementarbild gewonnen wird,
   wobei die Indexwerte zu der 3D-Bildberechnungseinrichtung geschickt werden.

2. System nach Anspruch 1, **dadurch gekennzeichnet, dass** der Indexwert ein nummerischer Wert ist, der für den raum-zeitlichen Abstand von zwei sukzessiven homologen Elementarbildern, die in zwei sukzessiven Ansichten des Objekts enthalten sind, repräsentativ ist.

3. System nach einem der Ansprüche 1 bis 2, **dadurch gekennzeichnet, dass** die 3D-Berechnungseinrichtungen aus mehreren 3D-Graphikkarten (GC) bestehen, die in Parallelschaltung zwischen den Filtereinrichtungen und dem Bildschirm angeordnet sind, wobei jede Graphikkarte (GC) eine spezifische Zugriffsadresse aufweist und jeder Indexwert mit einem spezifischen Zugriffsadressenwert einer der Graphikkarten (GC) verknüpft ist, was erlaubt, jeder der Graphikkarten (GC) eine Gruppe spezifischer Elementarbilder in Abhängigkeit von ihrem Inhalt zuzuordnen und somit eine räumliche Segmentierung durch Inhalt der Anzeige durch Maskierung und eine Beschleunigung der Flüssigkeit der Anzeige sicherzustellen.

4. System nach einem der Ansprüche 1 bis 3, **dadurch gekennzeichnet, dass** die Codierungseinrichtungen (B) Korrelationseinrichtungen ($M_1$) zum Korrelieren mehrerer sukzessiver Elementarbilder mit der gleichen Speicheradresse und dem gleichen Indexwert aufweisen, wobei der Indexwert, der repräsentativ für das Elementarbild bzw. die Gruppe von Elementarbildern ist, zu der 3D-Bildberechnungseinrichtung geschickt wird.

5. System nach Anspruch 4, **dadurch gekennzeichnet, dass** die Filtereinrichtungen ferner aufweisen: Hemmungseinrichtungen ($M_2$) zum Hemmen der Korrelationseinrichtungen ($M_1$) für jedes Elementarbild oder jede Gruppe von Elementarbildern, das bzw. die als mit der gleichen Adresse korreliert erkannt worden ist, was erlaubt, einen mit der Adresse verknüpften Indexwert zu den 3D-Bildberechnungseinrichtungen zu schicken.

6. System nach einem der Ansprüche 1 bis 5, **dadurch gekennzeichnet, dass** es ferner aufweist: Lerneinrichtungen ($M_3$) zum Lernen eines Gesetzes einer Entwicklung eines Ansichtspunkts des Bilds des Objekts von einer Peripherie aus, die die Rolle der Benutzerschnittstelle spielt, bei der Einführung einer Modifikation.

7. Verfahren zum Codieren eines numerischen Imitats eines Objekts in Form einer numerischen Datei eines dreidimensionalen Synthesebilds ausgehend von einem von einem Bildelementfluss gebildeten Modell des Objekts, das von einem Anwendungsmodul ausgehend von dem numerischen Imitat bereitgestellt wird, **dadurch gekennzeichnet, dass** es mindestens aufweist:

   - Unterscheiden (A) von Elementarbildern, von denen jedes mindestens für einen Teil des anzuzeigenden dreidimensionalen Synthesebilds konstitutiv ist, in dem Bildelementfluss,

   **dadurch gekennzeichnet, dass** das Verfahren ferner aufweist:

- Codieren (B) jedes sukzessiven Elementarbilds gemäß einem für den Inhalt des Elementarbilds repräsentativen Indexwert, der durch Anwendung einer Zerhackungsfunktion auf mindestens jedes sukzessive Elementarbild gewonnen wird;
- Berechnen der numerischen Werte des dreidimensionalen Synthesebilds ausgehend von dem für den Inhalt jedes Elementarbilds repräsentativen Indexwert und Speichern der numerischen Werte des Synthesebilds in Form einer numerischen Datei.

**8.** Verfahren nach Anspruch 7, **dadurch gekennzeichnet, dass** es ferner darin besteht, den Indexwert einer Gruppe von Elementarbildern mit einem Adressenwert von Berechnungsmittel, die zum Berechnen der numerischen Werte des dreidimensionalen Synthesebilds sind, zu verknüpfen, was erlaubt, jedem der die numerischen Werte berechnenden Berechnungsmittel eine Gruppe spezifischer Elementarbilder in Abhängigkeit von ihrem Inhalt zuzuordnen und somit eine räumliche Segmentation des dreidimensionalen Synthesebilds sicherzustellen.

**9.** Verfahren nach einem der Ansprüche 7 oder 8, **dadurch gekennzeichnet, dass** es darin besteht, ausgehend von dem Indexwert einen Prioritätskoeffizienten der Nutzung in der Anzeige für jedes Elementarbild zu berechnen.

**10.** Verfahren nach Anspruch 9, **dadurch gekennzeichnet, dass** es ferner darin besteht:

- in Abhängigkeit von dem Prioritätskoeffizienten einen Prädiktionswert zu berechnen;
- eine von dem Anwendungsmodul durchgeführte Anpassung der Ausführungsdaten des Anwendungsmoduls, was den Arbeitsspeicher und die Ausführungsregister betrifft, vorzunehmen.

**11.** Computerprogramm, aufweisend eine auf einem Speicherträger gespeicherte Folge von Befehlen zum Durchführen des Verfahrens nach einem der Ansprüche 7 bis 10.

## Claims

**1.** A system for displaying on a screen a digital geometry data of an object in the form of a synthesis image, by means of an application module comprising a user interface, said application module delivering, from said digital geometry data, a model of said object formed by a stream of picture elements to a means for calculating a three-dimensional image which can be displayed on said screen, **characterized in that** said system comprises at least means for filtering said stream of picture elements, installed at an input of said means for calculating a three-dimensional image and comprising:

- means for discriminating (A), in said stream of picture elements, elementary images each constituting at least one part of the image to display;

**characterized in that** the system further comprises:

- means for coding (B) each successive elementary image according to an index value representing the content of said elementary image, obtained by application of a hashing function to at least each successive elementary image,
said index values being delivered to said means for calculating a three-dimensional image.

**2.** The system according to claim 1, **characterized in that** said index value is a numerical value representative of the space-time discrepancy between two successive equivalent elementary images contained in two successive views of this object.

**3.** The system according to any of claims 1 to 2, **characterized in that** said means for calculating a three-dimensional image comprise a plurality of 3D graphics cards (GC) connected in parallel between said filter means and said screen, each graphics card (GC) comprising a specific access address, each index value being associated with a specific access address value of one of the graphics cards (GC), making it possible to allocate to each of the graphics cards (GC) a group of elementary images which are specific in relation to their content, and thus provide a spatial segmentation by content of the display by masking and an acceleration of the fluidity of the display.

**4.** The system according to any of claims 1 to 3, **characterized in that** said means for coding (B) comprise correlation means for correlating ($M_1$) a plurality of successive elementary images at a same storage address and of same index value, said index value representing said elementary image respectively of said group of elementary images being transmitted to said means for calculating a three-dimensional image.

5. The system according to claim 4, **characterized in that** said filter means further comprise inhibiting means for inhibiting ($M_2$) said correlation ($M_1$) means for any elementary image or group of elementary images recognized as correlated to the same address, making it possible to transmit an index value linked to said address to said means for calculating a three-dimensional image and to accelerate the display.

6. The system according to any of claims 1 to 5, **characterized in that** said system further comprises learning means for learning ($M_3$) a development law, when a modification is introduced, to a viewpoint of the object image from a peripheral acting as user interface.

7. A coding method in the form of a digital file of a three-dimensional synthesis image of a digital geometry data of an object, from a model of said object formed by a stream of picture elements delivered by an application module based on said digital geometry data, **characterized in that** said method consists at least in:

   - discriminating (A), in said stream of picture elements, elementary images each constituting at least one part of the three-dimensional synthesis image to display;

   **characterized in that** the method further comprises:

   - coding (B) each successive elementary image according to an index value representing a content of said elementary image, obtained by application of a hashing function to at least each successive elementary image;
   - calculating the numerical values of said three-dimensional synthesis image based on said index value representing the content of each elementary image, and storing said numerical values of said synthesis image in the form of a digital file.

8. The method according to claim 7, **characterized in that** said method further consists in associating said index value of a group of elementary images with an address value of the resources for the calculation of the numerical values of said three-dimensional synthesis image, making it possible to allocate to each of the calculation resources of said numerical values a group of specific elementary images according to their content and thus provide a spatial segmentation of the three-dimensional synthesis image.

9. The method according to any of claims 7 and 8, **characterized in that** said method consists in calculating a priority coefficient for use in the display for each elementary image, based on the index value.

10. The method according to claim 9, **characterized in that** said method further consists in:

   - calculating a prediction value based on the priority coefficient;
   - adapting the execution data of the application module relating to the RAM and the execution registers implemented by said application module.

11. A computer program comprising a suite of instructions stored on a memory medium for implementing the method according to any of claims 7 to 10.

APPLICATION GRAPHIQUE

PILOTE CARTE GRAPHIQUE

**FIG. 1b**
(ART ANTÉRIEUR)

CLIENT

APPLICATION GRAPHIQUE

PILOTE CARTE GRAPHIQUE

CARTE GRAPHIQUE

DISPOSITIF D'AFFICHAGE

**FIG. 1a**
(ART ANTÉRIEUR)

**FIG. 2a**

$$FEI = \left\{ I_i \left\{ EI_e \right\}_{e=1}^{e=ex} \right\}_{i=1}^{i=I}$$

$$GCD\,(DU_g) \quad g \in [1, G]$$

FEI

DISCRIMINATION — A

$$I_i \longrightarrow \left\{ EI_e \right\}_{e=1}^{e=ex}$$

CODAGE $(I_i)$ — B

$$\left\{ EI_e \right\}_{e=1}^{e=ex} \longrightarrow n$$

CALCUL D'AFFICHAGE — C

$$\left\{ EI_e \right\}_{e=1}^{e=ex}, n, i \longrightarrow Z_{k,g,i}$$

**FIG. 2b**

APPLICATION GRAPHIQUE

$EI_{e+2}$

$EI_{ex}$

$EI_{ex-2}$

$EI_{ex-1}$

$F_1$ — FILTRE ENTREE

$$\left\{ EI_e \right\}_{e=ex-2}^{e=ex}$$

$$n = H \left\{ EI_e \right\}_{e=ex-2}^{e=ex}$$

$F_2$ — FILTRE SORTIE

$$PC = f(n, Npx)$$

$$AA(RAM_{mem}(A, S_z), Reg(Exec))$$

$$\left\{ EI_e \right\}_{e=ex-2}^{e=ex}, n, i \longrightarrow Z_{k,g,i}$$

$n, k, g$

PILOTE CARTE GRAPHIQUE — GCD $(D_g)$

EP 2 022 009 B1

FIG. 3b

FIG. 3a

**FIG. 3c**

FIG. 4

FIG. 5

**EP 2 022 009 B1**

## RÉFÉRENCES CITÉES DANS LA DESCRIPTION

**Documents brevets cités dans la description**

- US 6362825 B

- US 5325485 A